# EUROPÄISCHE PATENTSCHRIFT

(11) **EP 0 993 863 B1**
(45) Veröffentlichungstag und Bekanntmachung des Hinweises auf die Patenterteilung: **03.12.2003**
(21) Anmeldenummer: 99118582.8
(22) Anmeldetag: 20.09.1999
(51) Int. Cl.: B01F 13/00, B01F 15/02, B05C 17/00

(54) **Mischer für Mehrkomponentenpasten**
Mixer for multi-component pastes
Mélangeur pour pâtes à plusieurs constituants

(30) Priorität: 16.10.1998 DE 29818499 U
(43) Veröffentlichungstag der Anmeldung: 19.04.2000
(73) Patentinhaber: 3M ESPE AG, 82229 Seefeld (DE)
(72) Erfinder: Wagner, Ingo, 82211 Herrsching (DE); Brandhorst, Gerd, 86899 Landsberg (DE); Peuker, Marc, 86938 Schondorf (DE); Wolf, Christina, 81373 München (DE)
(74) Vertreter: Strehl Schübel-Hopf & Partner

(56) Entgegenhaltungen:
- EP-A- 0 378 806
- EP-A- 0 492 412
- EP-A- 0 584 428
- EP-A- 0 885 651
- DE-U- 9 412 703
- DE-U- 29 706 235

## Beschreibung

Zur Herstellung pastöser Mehrkomponentenmassen, beispielsweise dentaler Abformmassen, werden Mischgeräte verwendet, bei denen die einzelnen Komponenten gleichzeitig aus separaten Kartuschenzylindern einem Mischer zugeführt werden, an dessen vorderem Ende die gemischte Paste austritt. Bei dem Mischer kann es sich um einen statischen Mischer oder einen dynamischen Mischer (mit rotierendem Mischerelement) handeln. Der am vorderen Ende des Mischers austretende Pastenstrang kann direkt auf einen Abformlöffel ausgebracht werden. Diesbezüglich offenbaren die EP 0 492 412 A1 bzw. die DE 297 06 235 U Mischer, die die im ersten Teil des Anspruchs 1 angegebenen Merkmale aufweisen.

Je nach Viskosität und Mischungsverhältnis kann es aufgrund unterschiedlichen Druckaufbaus in den einzelnen Kartuschenzylindern beim Anfahren des Gerätes dazu kommen, daß der eine Komponentenstrang den Mischer schneller erreicht als der andere. In einem solchen Fall tritt am Mischer zunächst ein Pastenstrang aus, dessen Mischungsverhältnis nicht dem gewünschten Wert entspricht und der aus diesem Grund beispielsweise schlechter oder langsamer abbindet.

Handelt es sich bei der einen Komponente um die Basispaste und bei der anderen um den Katalysator einer dentalen Abformmasse, so liegt beispielsweise ein Mischungsverhältnis zwischen Basispaste und Katalysator von 5:1 vor. Wegen der unterschiedlichen Materialeigenschaften und/oder -mengen und der unterschiedlich großen Einlaßöffnungen ist zu beobachten, daß sich der Mischer zunächst mit der Basispaste füllt, bevor der Katalysator eintrifft, so daß eine erste Länge von etwa 3 cm des ausgebrachten Pastenstrangs nicht das gewünschte Mischungsverhältnis aufweist.

Bei dem aus EP 0 584 428 A1 bekannten statischen Mischer ist zwischen einer mit Einlaßöffnungen für zwei Komponenten versehenen Platte und dem Mischerelement ein Raum vorgesehen, der von einer in Axialrichtung stehenden Trennwand in zwei Kammern unterteilt wird. Die eine Kammer bildet eine gerades axiales Strömungsrohr für die Komponente mit dem kleineren Volumenanteil, während die andere Kammer den restlichen Querschnitt einnimmt, der wesentlich größer ist als es dem Volumenanteil dieser Komponente entspricht, und durch eine Querwand von dem Mischerzylinder getrennt ist. Diese andere Kammer bildet somit eine Art Stauraum, den die Komponente mit dem größeren Volumenanteil zunächst füllt, bevor sie durch eine enge Durchtrittsöffnung in der Querwand an das Mischerelement gelangt. Auf diese Weise soll erreicht werden, daß beide Komponenten das Mischerelement im wesentlichen gleichzeitig erreichen.

Ein Problem bei diesem bekannten Gerät besteht darin, daß die genannte Querwand mit der engen Durchtrittsöffnung den Strömungswiderstand für die betreffende Komponente beträchtlich erhöht und daher das gesamte Gerät schwergängig macht. Ein weiterer Nachteil besteht in der durch den Stauraum deutlich erhöhten axialen Länge des Gerätes.

Bekannt ist auch ein von der Fa. MIXPAC Systems AG hergestellter Mischer für Dentalmassen, bei dem zwei Einlaßstutzen mit unterschiedlichen Querschnitten für Basis- und Katalysatormasse in eine Kammer münden und von dieser gemeinsam an ein statisches Mischerelement gelangen. Eine in der Kammer vorgesehene Trennwand bildet eine Verzögerungskammer für die Basismasse, so daß diese erst nach Zurücklegen einer Vorlaufstrecke auf die Katalysatormasse trifft und mit dieser gemeinsam zum Mischerelement weiterströmt.

Der Erfindung liegt die Aufgabe zugrunde, einen möglichst leichtgängigen und kompakten Mischer zur Herstellung von Mehrkomponentenpasten anzugeben, mit dem sich ein Pastengemisch mit von Anfang an richtigem Mischungsverhältnis erzeugen läßt.

Die erfindungsgemäße Lösung dieser Aufgabe ist in Anspruch 1 angegeben. Der danach vorgesehene Umwegkanal zwischen der von der Komponente mit dem größeren Volumenanteil durchsetzten Einlaßöffnung und dem Mischerelement kann über seine gesamte Länge denselben Querschnitt haben wie die betreffende Einlaßöffnung, so daß der gesamte Strömungswiderstand kaum erhöht wird. Ferner bewirkt der Umwegkanal infolge seiner Anordnung keine wesentliche Erhöhung der Gesamtabmessungen des Mischers.

Aus EP 0 302 819 A2 ist ein Kartuschenmagazin für fließfähige Massen bekannt, das zwei Behälter mit unterschiedlichen Durchmessern zur Aufnahme unterschiedlicher Mengen zweier Komponenten der Masse aufweist. Auch bei diesem Gerät sind zwar die Verbindungskanäle zwischen den Kartuschenauslässen und dem gemeinsamen Auslaßstutzen unterschiedlich lang; dies beruht aber lediglich auf der Tatsache, daß der gemeinsame Auslaßstutzen aus der axialen Mitte des Kartuschensystems zu einem Rand hin versetzt ist. Außerdem tritt das genannte Problem des unrichtigien Mischungsverhältnisses am Stranganfang bei der zweiten und jeder weiteren Anwendung auf, da dann kein zeitversetzter Pastenvorschub mehr erfolgt.

Die bei dem erfindungsgemäßen Mischer gewählte Anordnung ist insofern günstig, als beide Komponenten das Mischerelement an dicht beieinander gelegenen Stellen erreichen und jeder Mischvorgang von Anfang an effektiv wird.

Eine für typische Basis- und Katalysatormassen zweckmäßige Gestaltung ist die Anordnung der Verzögerungseinrichtung im Strömungsweg der Basismasse. Da im übrigen ein gewisser Überschuß an Katalysator allenfalls zu einem geringfügig schnelleren Abbinden führt, die Eigenschaften der fertigen Paste jedoch nicht wesentlich ändert, ist es in derartigen Fällen zweckmäßig sicherzustellen, daß der Katalysator die Mischkammer zuerst benetzt, so daß von Anfang an eine brauchbar gemischte Paste erzeugt wird.

Ein Ausführungsbeispiel der Erfindung wird nachstehend anhand der Zeichnung näher erläutert. Darin zeigt
- Figur 1: einen Axialschnitt durch einen Mischer längs der Linie I-I nach Figur 2,
- Figur 2: eine Stirnansicht des Mischers in Richtung des Pfeils II in Figur 1, und
- Figur 3: einen Schnitt längs der Linie III-III in Figur 1.

Der in der Zeichnung dargestellte Mischer umfaßt ein in seinem Hauptteil zylindrisches Gehäuse **10** mit einer vorderen Ausbringöffnung **11,** einer die hintere Gehäusewand bildenden Abschlußplatte **12** und einem in dem Gehäuse **10** und in der Abschlußplatte **12** gelagerten Mischerelement **13** mit Mischerflügeln **14.** Eine am hinteren Ende des Mischerkerns vorgesehene Sechskantöffnung **15** dient zum Ankoppeln des Mischerelements **13** an eine (nicht gezeigte) Antriebsachse.

Die Abschlußplatte **12** weist zwei nach hinten ragende Einlaßstutzen **16, 17** auf, mit denen der Mischer sich an das vordere Ende einer in eine Ausbringvorrichtung eingesetzten (nicht gezeigten) Kartusche ankoppeln läßt. In dem dargestellten Ausführungsbeispiel ist angenommen, daß der Mischer zur Herstellung einer dentalen Abformmasse dient, die aus einer pastösen Basismasse und einer Katalysatormasse in einem Verhältnis von beispielsweise 5:1 gemischt wird, wobei der Einlaßstutzen **16** für die Basismasse eine größere Querschnittsfläche hat als der Einlaßstutzen **17** für den Katalysator.

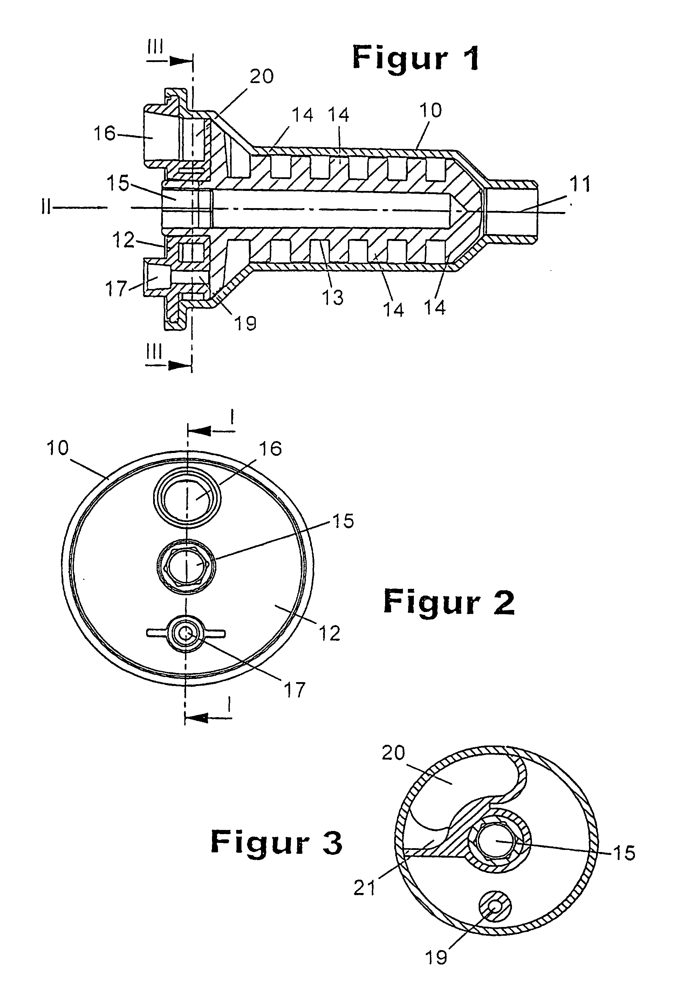

Wie aus Figur 1 und 3 hervorgeht, führt ein mit dem Einlaßstutzen **17** verbundener Kanal **19** geradlinig in die das Mischerelement **13** enthaltende Kammer des Mischergehäuses **10.**

Dagegen verläuft der von der Basismasse zurückzulegende Weg von dem Einlaßstutzen **16** über einen Umwegkanal **20** und eine an dessen Ende angeordnete Durchtrittsöffnung **21** in die Mischkammer des Gehäuses **10.** Der Umwegkanal **20** liegt im wesentlichen in einer quer zur Mischerachse stehenden Ebene und erstreckt sich über einen Winkel von etwa 90° bogenförmig um die Achse. Die genannte Ebene kann gegenüber der Achse etwas geneigt sein, so daß sich insgesamt ein etwa schraubenförmiger Umwegkanal **20** ergibt.

Der an den Einlaßstutzen **16** anschließende Umwegkanal **20** bewirkt, daß die Durchtrittsöffnung **21** um weniger als 180° gegenüber dem geraden Einlaßstutzen **17** versetzt ist, so daß beide Komponenten an dicht benachbarten Stellen das Mischerelement **13** erreichen. Dies ist für eine gute Vermischung günstig.

Bei Inbetriebnahme des Mischers werden die beiden Komponenten durch die (nicht gezeigte) Ausbringvorrichtung mit Hilfe von in der Kartusche vorgesehenen Kolben in die Einlaßstutzen **16** und **17** gedrückt. Während der den Einlaßstutzen **17** durchsetzende Katalysator über den gerade und axial verlaufenden Kanal **19** unmittelbar in die Mischkammer gelangt, strömt die dem Einlaßstutzen **16** zugeführte Basismasse über den Umwegkanal **20** und die Durchtrittsöffnung **21** in die Mischkammer. Dadurch wird erreicht, daß die Basismasse mit dem größeren Volumenanteil das Mischerelement **13** jedenfalls nicht vor dem Katalysator erreicht.

Erreicht der Katalysator das Mischerelement **13** so rechtzeitig, daß er dieses benetzt, bevor die Basismasse eintrifft, so wird dadurch nur das anfängliche Mischungsverhältnis verändert; ein geringer Überschuß an Katalysator ist aber bei den hier angenommenen dentalen Abformmassen unkritisch und einem Überschuß an Basismasse vorzuziehen.

Die beschriebenen Maßnahmen sind auch bei Mischern anwendbar, die den fertigen Pastenstrang aus mehr als zwei Komponenten erzeugen. In einem solchen Fall können an zwei oder mehreren Einlaßstutzen Umwegkanäle anschließen, die gegebenenfalls auch unterschiedlich lang sind, um je nach den Strömungseigenschaften jeder Komponente zu erreichen, daß sämtliche Komponenten das Mischerelement **13** im wesentlichen gleichzeitig erreichen.

## Patentansprüche

1. Mischer zur Herstellung von dentalen Abformmassen aus einer Basismasse und einer Katalysatormasse mit gegenüber der Basismasse geringerem Volumenanteil, mit
einem Gehäuse (**10**) mit einer vorderen Ausbringöffnung (**11**) und einer die hintere Gehäusewand bildenden Abschlußplatte **(12),** an der nach hinten ragende Einlaßstutzen zum Ankoppeln an das vordere Ende einer in eine Ausbringvorrichtung einzusetzenden Kartusche angeordnet sind, wobei die Einlaßstutzen eine unmittelbar in die Mischkammer führende Einlaßöffnung (**17**) für die Katalysatormasse und eine Einlaßöffnung **(16)** für die Basismasse bilden, die eine größere Querschnittsfläche hat als die Einlaßöffnung (**17**) für die Katalysatormasse, und
einem in dem Gehäuse **(10)** um dessen Längsachse drehbaren, in der Abschlußplatte **(12)** gelagerten Mischerelement **(13),**
**dadurch gekennzeichnet, daß** zwischen der Einlaßöffnung **(16)** für die Basismasse und der Mischkammer eine Verzögerungskammer (**20**) vorgesehen ist, die einen den Weg von der Einlaßöffnung **(16)** zu dem Mischerelement **(13)** verlängernden, in einer quer zur Mischerachse stehenden Ebene angeordneten und längs einem Bogen über einen Winkel von im wesentlichen 90° um die Mischerachse verlaufenden Umwegkanal **(20)** bildet, wobei Basis- und Katalysatormasse an um weniger als 180° gegeneinander versetzten Stellen an das Mischerelement **(13)** gelangen.

2. Mischer nach Anspruch 1, wobei das Verhältnis von Basismasse zu Katalysatormasse 5:1 beträgt.

3. Verwendung des Mischers nach Anspruch 1 oder 2 in einem Verfahren zur Herstellung einer eine Basismasse und einen Katalysator enthaltenden pastösen Mehrkomponentenmasse, wobei bei Inbetriebnahme des Mischers die Komponenten durch eine Ausbringvorrichtung mit Hilfe von in einer Kartusche vorgesehenen Kolben in die Einlaßöffnungen (**16, 17**) gedrückt werden.

## Claims

1. A mixer for producing dental impression masses from a base mass and a catalyst mass, the catalyst mass having a smaller volume proportion than the base mass, comprising
a housing (**10**) having a front dispensing opening (**11**) and a terminating plate (**12**) forming the rear wall of the housing, with inlet pipes being arranged on the terminating plate and adapted to be coupled to the front end of a cartridge to be placed in a dispensing device, wherein the inlet pipes form a catalyst mass inlet opening (**17**) which leads directly into the mixing chamber and a base mass inlet opening (**16**) which has a larger cross-sectional area than the catalyst mass inlet opening (**17**), and
a mixer element (**13**) supported in the terminating plate (**12**) for rotation within the housing (**10**) about the longitudinal axis thereof,
**characterised in that** a delay chamber (**20**) is provided between the base mass inlet opening (**16**) and the mixing chamber, the delay chamber constituting a deviation channel (**20**) that increases the length of the path from the inlet opening (**16**) to the mixer element (**13**), is disposed in a plane transverse to the mixer axis, and extends along an arc covering an angle of substantially 90° about the mixer axis, wherein the base and catalyst masses reach the mixer element (**13**) at locations displaced less than 180° from each other.

2. The mixer of claim 1, wherein the proportion of base mass to catalyst mass is 5 : 1.

3. Use of the mixer of claim 1 or claim 2 in a process for producing a pasty multiple-component mass containing a base mass and a catalyst mass wherein, when the mixer is set into operation, the components are pressed into the inlet opening (**16, 17**) by means of pistons provided in a cartridge.

## Revendications

1. Mélangeur pour la préparation de pâtes d'empreinte dentaires constituées d'une pâte de base et d'une pâte de catalyseur présentant une part volumétrique faible par rapport à la pâte de base, comprenant :
un boîtier (10) avec une ouverture de sortie antérieure (11) et une plaque de fermeture (12) qui forme la paroi arrière du boîtier, sur laquelle sont agencées des tubulures d'entrée en saillie vers l'arrière pour le couplage à l'extrémité antérieure d'une cartouche à mettre en place dans un dispositif d'application, les tubulures d'entrée formant une ouverture d'entrée (17) pour la pâte de catalyseur qui mène directement dans la chambre de mélange, et une ouverture d'entrée (16) pour la pâte de base, qui a une surface de section transversale plus importante que l'ouverture d'entrée (17) pour la pâte de catalyseur, et
un élément mélangeur (13) monté dans la plaque de fermeture (12) dans le boîtier (10) avec faculté de rotation autour de son axe longitudinal,
**caractérisé en ce que**, entre l'ouverture d'entrée (16) pour la pâte de base et la chambre de mélange, il est prévu une chambre de retardement (20) qui forme un canal de contournement qui prolonge le trajet depuis l'ouverture d'entrée (16) vers l'élément mélangeur (13), ledit canal étant agencé dans un plan perpendiculaire à l'axe du mélangeur et s'étendant le long d'un arc couvrant un angle de sensiblement 90° autour de l'axe du mélangeur, la pâte de base et la pâte de catalyseur parvenant à l'élément mélangeur (13) à des emplacements décalés de moins de 184° l'un par rapport à l'autre.

2. Mélangeur selon la revendication 1, dans lequel le rapport de la pâte de base à la pâte de catalyseur est de 5:1.

3. Utilisation du mélangeur selon l'une ou l'autre des revendications 1 et 2 dans un procédé pour préparer une pâte à plusieurs composants qui contient une pâte de base et un catalyseur, dans laquelle lors de la mise en service du mélangeur, les composants sont injectés sous pression dans les ouvertures d'entrée (16, 17) par un dispositif d'application à l'aide de pistons prévus dans une cartouche.
